# EUROPÄISCHE PATENTSCHRIFT

(11) **EP 4 037 936 B1**
(45) Veröffentlichungstag und Bekanntmachung des Hinweises auf die Patenterteilung: **01.02.2023**
(21) Anmeldenummer: 21713633.2
(22) Anmeldetag: 18.03.2021
(51) Int. Cl.: B60Q 1/00, F21S 41/141, F21S 43/13, F21S 41/50, F21S 43/50

(54) **SCHEINWERFER FÜR EIN KRAFTFAHRZEUG**
HEADLIGHT FOR A MOTOR VEHICLE
FEU AVANT POUR VÉHICULE AUTOMOBILE

(30) Priorität: 06.05.2020 DE 102020112312
(43) Veröffentlichungstag der Anmeldung: 10.08.2022
(73) Patentinhaber: Audi AG, 85045 Ingolstadt (DE)
(72) Erfinder: HÉLOT, Jacques, 85051 Ingolstadt (DE)
(74) Vertreter: Hofstetter, Schurack & Partner
(86) Internationale Anmeldenummer: PCT/EP2021/056891
(87) Internationale Veröffentlichungsnummer: WO 2021/223929

(56) Entgegenhaltungen:
- WO-A1-2020/079060
- DE-A1-102017 219 797
- DE-U1-202020 000 304
- US-B1- 10 281 113

## Beschreibung

Die Erfindung betrifft einen Scheinwerfer für ein Kraftfahrzeug mit einem Trägerelement, auf welchem eine Mehrzahl von Leuchtdioden angeordnet ist, die bezüglich einer Lichtabgabe individuell steuerbar sind, um mittels des Scheinwerfers Licht gemäß einer vorgebbaren Lichtverteilung abzugeben. Darüber hinaus betrifft die Erfindung ein Kraftfahrzeug mit wenigstens einem Kraftfahrzeugscheinwerfer.

Scheinwerfer der gattungsgemäßen Art sowie Kraftfahrzeuge mit gattungsgemäßen Fahrzeugscheinwerfern sind im Stand der Technik umfänglich bekannt, sodass es eines gesonderten druckschriftlichen Nachweises hierfür nicht bedarf. Fahrzeugscheinwerfer der gattungsgemäßen Art werden zum Beispiel als Frontscheinwerfer zur Ausleuchtung eines Fahrbereichs genutzt, in den das Kraftfahrzeug während eines bestimmungsgemäßen Fahrbetriebs hineingeführt wird. Darüber hinaus können Fahrzeugscheinwerfer auch Rückfahrscheinwerfer sein, die dazu dienen, einen Fahrbereich beim Rückwärtsfahren des Kraftfahrzeugs auszuleuchten. Fahrzeugscheinwerfer können darüber hinaus auch zur weiteren vorschriftsmäßigen Beleuchtung des Kraftfahrzeugs dienen, beispielsweise zum Bereitstellen einer Fahrbeleuchtung, insbesondere einer rückwärtigen Fahrbeleuchtung, einer Bremsbeleuchtung und/oder dergleichen.

Gattungsgemäße Scheinwerfer sind häufig nach Art eines Pixelscheinwerfers ausgebildet. Der Pixelscheinwerfer kann beispielsweise basierend auf einem Leuchtdioden-Array oder dergleichen ausgebildet sein. Dabei ist es möglich, dass die Leuchtdioden zur Abgabe von Licht in einer vorgegebenen Farbe ausgebildet sind oder auch eingestellt werden können. Beispielsweise kann vorgesehen sein, dass für die Realisierung einer Bremslichtfunktionalität rote Leuchtdioden genutzt werden. Zur Realisierung einer Abbiegefunktionalität können beispielsweise gelbe Leuchtdioden genutzt werden. Für Frontscheinwerfer kann vorgesehen sein, dass die Leuchtdioden so konstruiert sind, dass sie im Wesentlichen weißes Licht abgeben. Dies kann zum Beispiel dadurch realisiert sein, dass die Leuchtdioden einen Konversionsstoff aufweisen, der bei Beaufschlagung mit Licht einer jeweiligen Leuchtdiode im Wesentlichen weißes Licht abgibt oder auch indem eine jeweilige Leuchtdiode mehrteilig ausgebildet ist, wobei ein jeweiliger Leuchtdiodenteil Licht in einer unterschiedlichen Farbe abgibt, die summiert einen im Wesentlichen weißen Lichteindruck erzeugt. Die Farben können zum Beispiel rot, grün und blau sein.

Darüber hinaus ist es im Stand der Technik mittlerweile üblich, insbesondere wenn das Kraftfahrzeug ein oder mehrere Fahrassistenzsysteme aufweist, Beobachtungskameras am Fahrzeug vorzusehen, um die Umgebung des Kraftfahrzeugs, insbesondere während des bestimmungsgemäßen Fahrbetriebs, zu erfassen. Neben Beobachtungskameras können darüber hinaus jedoch auch weitere Sensoreinheiten beziehungsweise Sensorelemente vorgesehen sein, beispielsweise Radarsensoren, Temperatursensoren, Feuchtigkeitssensoren und/oder dergleichen. Besonders die Beobachtungskameras werden im Stand der Technik an unterschiedlichen Positionen des Kraftfahrzeugs angebracht, beispielsweise hinter einem Primärrand einer Windschutzscheibe oder auch dem Exterieur in einem Grill.

Auch wenn sich dieser Stand der Technik bewährt hat, so zeigen sich dennoch Nachteile. Die Vielzahl der Einheiten und Elemente führt bei einem Kraftfahrzeug zu konstruktiven Anforderungen, die zu Fugen an der Karosserie des Kraftfahrzeugs führen können. Darüber hinaus ergeben sich dadurch Toleranzprobleme, die die Konstruktion des Kraftfahrzeugs, insbesondere dessen Karosserie, weiter erschweren. Im Übrigen ist dies mit entsprechend hohen Kosten verbunden.

Aus der US 2019/0385990 A1 sind zum Beispiel ein Anzeigemodul und ein Elektronikgerät hiermit bekannt. Ferner offenbart die WO 2019/203926 A1 optische Mehrfachstapelelemente, die zeitliches und permanentes Bonding nutzen. Ferner offenbart die US 2019/0198732 A1 lichtintensitätsadaptierbare Leuchtdiodenseitenwände. Weiterhin offenbart die DE 10 2017 219 797 A1 ein Lichtleitersystem mit Sensoren, einen Scheinwerfer mit Lichtleitersystem und ein Fahrzeug. Ferner offenbart die US 10,281,113 B1 einen Kühlergriff für ein Fahrzeug. Ein weiterer Scheinwerfer ist aus der WO 2020/079060 A1 bekannt.

Der Erfindung liegt die Aufgabe zugrunde, die mit den Sensoreinheiten beziehungsweise Sensorelementen verbundenen Probleme zu reduzieren.

Als Lösung werden mit der Erfindung ein Scheinwerfer und ein Kraftfahrzeug gemäß den unabhängigen Ansprüchen vorgeschlagen.

Vorteilhafte Weiterbildungen ergeben sich durch Merkmale der abhängigen Ansprüche.

Bezüglich eines gattungsgemäßen Scheinwerfers wird mit der Erfindung insbesondere vorgeschlagen, dass die Leuchtdioden als Mikroleuchtdioden ausgebildet sind und in einem leuchtdiodenfreien Bereich des Trägerelements wenigstens ein Sensorelement angeordnet ist.

In Bezug auf ein gattungsgemäßes Kraftfahrzeug wird mit der Erfindung insbesondere vorgeschlagen, dass der Fahrzeugscheinwerfer als Scheinwerfer gemäß der Erfindung ausgebildet ist.

Die Erfindung basiert unter anderem auf dem Gedanken, dass durch Integration des wenigstens einen Sensorelements in den Fahrzeugscheinwerfer der konstruktive Aufwand bezüglich der Anordnung von Sensorelementen am Kraftfahrzeug erheblich reduziert werden kann. Zugleich kann erreicht werden, dass das wenigstens eine Sensorelement auf einfache Weise in den Scheinwerfer integriert werden kann, und zwar ohne dass ein besonders großer zusätzlicher Aufwand erforderlich wäre. Insgesamt ergibt sich daher für das Kraftfahrzeug eine deutliche Aufwandsreduzierung. Zudem können die konstruktiven Probleme, die durch Fugen und/oder Toleranzen verursacht sein können, deutlich reduziert werden. Insgesamt kann somit die Funktionalität des Scheinwerfers erhöht und der Aufwand in Bezug auf die Konstruktion des Kraftfahrzeugs reduziert werden.

Darüber hinaus können die Sensorelemente, beispielsweise wenn sie durch Kameras und/oder Sensoren beziehungsweise Sensoreinheiten gebildet sind, gegenüber dem Stand der Technik besser in das Kraftfahrzeug beziehungsweise dessen Konstruktion integriert werden.

Die Erfindung nutzt also unter anderem den Gedanken, auf dem gleichen Trägerelement, auf dem die Leuchtdioden, die vorliegend als Mikroleuchtdioden ausgebildet sind, angeordnet sind, auch die Sensorelemente anzuordnen. Diese Vorteile können natürlich zugleich auch dazu genutzt werden, die Erscheinungsform des Kraftfahrzeugs, insbesondere sein Design, besser gestalten zu können. Die Erfindung ermöglicht hier neue Freiheitsgrade.

Mikroleuchtdioden sind Leuchtdioden, die sehr kleine Abmessungen aufweisen. Vorzugsweise weist die Mikroleuchtdiode eine Fläche von etwa einem Quadratmillimeter oder weniger auf, besonders bevorzugt eine Fläche von etwa 0,01 Quadratmillimeter. Die Mikroleuchtdioden können mit bekannten Techniken mit dem Trägerelement verbunden sein. Die Mikroleuchtdioden können mittels eines Verbindungselements wie einem Klebstoff oder dergleichen an wenigstens einen Trägerelement befestigt sein. Dem Grunde nach können die Mikroleuchtdioden jedoch auch einstückig mit dem Trägerelement ausgebildet sein. Das Trägerelement kann somit beispielsweise ein Substrat für die Mikroleuchtdioden bereitstellen.

Dem Grunde nach gilt das Vorgenannte auch für das wenigstens eine Sensorelement, welches beispielsweise als Kamera oder sonstiger Sensor ausgebildet sein kann. Das Sensorelement hat vorzugsweise ebenfalls sehr kleine Abmessungen und kann besonders bevorzugt eine Fläche von etwa 15 Quadratmillimeter oder weniger umfassen. Das wenigstens eine Sensorelement kann als Halbleiterchip ausgebildet sein und vorzugsweise ebenso wie die Mikroleuchtdioden mit dem Trägerelement verbunden sein. Darüber hinaus besteht natürlich dem Grunde nach die Möglichkeit, dass auch das wenigstens eine Sensorelement einstückig mit dem Trägerelement ausgebildet ist.

Das Trägerelement ist ein Bauteil, welches aus einem im Wesentlichen starren Werkstoff gebildet sein kann. Das Trägerelement kann aber auch aus einem mehrschichtigem Werkstoff, einem Verbundwerkstoff und/oder dergleichen gebildet sein. Der Werkstoff des Trägerelements kann zum Beispiel eine Keramik, Glas oder auch ein Kunststoff, beispielsweise ein faserverstärkter Kunststoff, Kombinationen hiervon und/oder dergleichen sein. Vorzugsweise ist das Trägerelement einstückig ausgebildet. Je nach Anforderung kann jedoch auch vorgesehen sein, dass das Trägerelement mehrteilig ausgebildet ist. Bei einer mehrteiligen Konstruktion des Trägerelements kann vorgesehen sein, dass die einzelnen Trägerelementteile mittels bekannter Verbindungstechniken miteinander mechanisch verbunden sind. Das Trägerelement kann zugleich auch einen elektrischen Anschluss für die Mikroleuchtdioden und/oder das wenigstens eine Sensorelement bereitstellen. Das Trägerelement kann zum Beispiel elektrische Leiterbahnen nach Art einer Leiterplatte aufweisen.

Erfindungsgemäß ist das Trägerelement transparent oder opak ausgebildet, wobei die Mikroleuchtdioden auf einer ersten der beiden gegenüberliegenden Oberflächen des Trägerelements und das wenigstens eine Sensorelement auf einer der ersten Oberfläche gegenüberliegenden zweiten Oberfläche des Trägerelements angeordnet sind. Bei dieser Ausgestaltung ist insbesondere vorgesehen, dass entweder die Lichtabgabe oder das Sensieren durch das Trägerelement hindurch erfolgt. Das Trägerelement kann in dieser Ausgestaltung zum Beispiel aus Glas oder dergleichen gebildet sein. Dem Grunde nach kann das Trägerelement auch aus einem geeigneten Kunststoff gebildet sein, beispielsweise einem geeigneten Acryl-Werkstoff, basierend auf Polyacrylat und/oder dergleichen. Natürlich können auch Kombinationen hiervon vorgesehen sein. Vorzugsweise ist das Trägerelement plattenartig ausgebildet und weist eine Wölbung auf. Das Trägerelement kann dem Grunde nach als ebene Platte ausgebildet sein, beispielsweise mit einer eckigen und/oder runden Kantenkontur. Um jedoch besser an eine Karosserie eines Fahrzeugs angepasst werden zu können, ist das Trägerelement gewölbt ausgebildet. Die Wölbung kann konvex und/oder konkav sein. Vorzugsweise ist die Wölbung derart ausgebildet, dass sie sich in die Karosserie an der Position, an der der Scheinwerfer angeordnet werden soll, möglichst nahtlos einfügen kann. Der Scheinwerfer insgesamt kann sich daher zum Beispiel durch eine geringe Bauhöhe auszeichnen, die im Wesentlichen durch die Dicke des Trägerelements sowie der darauf angeordneten Elemente bestimmt ist. Darüber hinaus kann natürlich vorgesehen sein, dass der Scheinwerfer zusätzliche Elemente nach Art von Beschichtungen oder transparenten Schutzschichten aufweist, um den Fahrzeugscheinwerfer während des bestimmungsgemäßen Betriebs am Kraftfahrzeug vor äußeren Einwirkungen möglichst gut schützen zu können und/oder eine möglichst guten Anpassung an eine Kontur der Karosserie zu ermöglichen. Derartige zusätzliche Elemente können beispielsweise eine geeignete Glasschicht, Kunststoffschicht und/oder dergleichen sein.

Gemäß einer Weiterbildung, die nicht unter die vorliegende Erfindung fällt, wird vorgeschlagen, dass das Trägerelement intransparent ausgebildet ist und sowohl die Mikroleuchtdioden als auch das wenigstens eine Sensorelement auf einer von zwei gegenüberliegenden Oberflächen des Trägerelements gemeinsam angeordnet sind. Vorzugsweise ist bei dieser Ausgestaltung vorgesehen, dass die Lichtabgabe durch die Mikroleuchtdioden in eine Richtung abgewandt vom Trägerelement erfolgt. Entsprechend ist das wenigstens eine Sensorelement derart am Trägerelement angeordnet, dass es in einen Raumbereich sensieren kann, welcher ebenfalls abgewandt zum Trägerelement ist. Daher braucht weder die Lichtabgabe noch das Sensieren durch das Trägerelement hindurch zu erfolgen. In einer solchen Ausgestaltung kann das Trägerelement undurchsichtig sein und aus einem entsprechenden Werkstoff gebildet sein.

Ferner wird in einer Weiterbildung, die nicht unter die vorliegende Erfindung fällt, vorgeschlagen, dass die Oberfläche, auf der die Mikroleuchtdioden und das wenigstens eine Sensorelement angeordnet sind, weiß oder silbrig ist. Diese Ausgestaltung kann zum Beispiel dadurch erreicht werden, dass das Trägerelement selbst aus einem weißen oder silbrigen Werkstoff gebildet ist. Darüber hinaus kann jedoch auch vorgesehen sein, dass die Oberfläche eine entsprechende Beschichtung aufweist. Die Beschichtung kann durch einen Lack, eine Oberflächenbearbeitung und/oder dergleichen realisiert sein. Vorzugsweise ist das Trägerelement opak ausgebildet und die Mikroleuchtdioden sind derart angeordnet, dass deren Lichtabgabe in Richtung des Trägerelements erfolgt. Diese Ausgestaltung hat den Vorteil, dass durch das opak ausgebildete Trägerelement die Erkennbarkeit der einzelnen Mikroleuchtdioden visuell verschwimmen kann und damit der Scheinwerfer insgesamt eine im Wesentlichen gleichmäßige Lichtabgabe über seine Oberfläche ermöglicht. Darüber hinaus erlaubt es diese Ausgestaltung auch, Positionen, an denen das wenigstens eine Sensorelement angeordnet ist, und die für die Lichtabgabe nicht zur Verfügung steht, durch die Diffusität der Lichtabgabe zumindest teilweise von außen unsichtbar zu machen. Natürlich brauchen nicht alle Mikroleuchtdioden an einer einzigen der beiden Oberflächen angeordnet zu sein. Es kann - je nach Bedarf - natürlich auch eine Kombination vorgesehen sein, sodass die Lichtabgabe lediglich von einem Teil der Mikroleuchtdioden durch das Trägerelement hindurch erfolgt.

Darüber hinaus wird vorgeschlagen, dass das Trägerelement transparent ausgebildet ist und das wenigstens eine Sensorelement einen zu erfassenden Bereich durch das Trägerelement hindurch erfasst. Der Begriff Transparenz bezieht sich bei dieser Weiterbildung darauf, dass das Sensorelement mittels eines Sensormediums seine bestimmungsgemäße Sensorfunktion durch das Trägerelement hindurch realisieren kann. Ist zum Beispiel vorgesehen, dass das Sensorelement einen Radarsensor umfasst, bezieht sich die Transparenz auf die Transparenz in Bezug auf Radarsignale. Ebenso kann vorgesehen sein, dass das Sensorelement Infrarotlicht erfasst. In diesem Fall ist mit Transparenz gemeint, dass das Trägerelement für infrarotes Licht transparent ist. Natürlich können auch beliebige weitere Ausgestaltungen hierzu vorgesehen sein.

Es wird ferner vorgeschlagen, dass mehrere Sensorelemente vorgesehen sind, wobei die Sensorelemente in einem ersten Bereich des Trägerelements gemeinsam angeordnet sind, der von einem zweiten Bereich getrennt ausgebildet ist, in dem die Mikroleuchtdioden angeordnet sind. Dadurch kann eine bereichsweise Funktionalität des Fahrzeugscheinwerfers bereitgestellt werden, nämlich ein Bereich, in dem mittels der Mikroleuchtdioden die Lichtabgabe erfolgt, und ein weiterer Bereich, der der Sensierung mittels der Sensorelemente dient. Die Sensorelemente brauchen nicht gleich zu sein. So kann zum Beispiel vorgesehen sein, dass eine Kamera mit einem Infrarotsensor und einem Radarsensor als Sensorelemente kombiniert wird. Auch weitere Ausgestaltungen hierzu sind denkbar.

Gemäß einer weiteren Ausgestaltung wird vorgeschlagen, dass mehrere Sensorelemente vorgesehen sind, wobei die Sensorelemente jeweils zumindest durch eine der Mikroleuchtdioden voneinander beabstandet angeordnet sind. Diese Ausgestaltung hat den Vorteil, dass die Sensorelemente über die Erstreckung des Trägerelements an dessen Oberfläche verteilt angeordnet werden können. Dies gilt gleichermaßen auch für die Mikroleuchtdioden. Das ermöglicht es, die Sensierung über einen weiten Bereich zu ermöglichen. Besonders vorteilhaft erweist sich dies, wenn der Scheinwerfer zum Beispiel als Frontscheinwerfer des Kraftfahrzeugs genutzt wird und aufgrund der Wölbung mittels Kameras als Sensorelementen ein weiter Umfeldbereich des Kraftfahrzeugs erfasst werden kann. Beispielsweise ist es dadurch möglich, zumindest teilweise auch seitliche Bereiche erfassen zu können und so auf einfache Weise ein möglichst detailliertes Umfeld des Kraftfahrzeugs erfassen zu können. Die Sensorelemente können zumindest teilweise gemeinsam ausgewertet werden, um eine Umfeldsituation bedarfsweise erfassen zu können.

Ist ein Sensorelement beispielsweise durch eine Kamera gebildet, kann das Sensorelement eine geeignete Optik umfassen. Ist das Sensorelement beispielsweise so angeordnet, dass es durch das Trägerelement hindurch sensiert, kann die Optik zumindest teilweise auch durch das Trägerelement realisiert sein. Zu diesem Zweck kann das Trägerelement eine entsprechende Formung oder auch einen entsprechenden lokalen Brechungsindex aufweisen. Dadurch ist es möglich, Linsen- und/oder Prismeneffekte zu realisieren, um die Funktion der Kamera realisieren oder verbessern zu können.

Die für den erfindungsgemäßen Scheinwerfer angegebenen Vorteile und Wirkungen gelten natürlich gleichermaßen auch für das mit dem erfindungsgemäßen Scheinwerfer ausgerüstete Kraftfahrzeug und umgekehrt.

Das Kraftfahrzeug kann darüber hinaus eine Steuervorrichtung umfassen, die dazu dienen kann, zumindest einen Fahrzeugscheinwerfer steuern zu können. Dem Grunde nach kann die Steuervorrichtung natürlich auch durch den erfindungsgemäßen Scheinwerfer umfasst sein. Vorzugsweise ist die Steuervorrichtung ausgebildet, nicht nur die Mikroleuchtdioden in vorgebbarer Weise mit elektrischer Energie zu beaufschlagen, sondern auch Sensorsignale des wenigstens einen Sensorelements zu erfassen und zumindest einer übergeordneten Fahrzeugsteuerung zur Verfügung zu stellen. Dem Grunde nach kann jedoch auch vorgesehen sein, dass die Steuervorrichtung eine erste Auswertung der Sensorsignale vornimmt und diese dann für eine weitere Bearbeitung durch die übergeordnete Fahrzeugsteuerung zur Verfügung stellt. Die übergeordnete Fahrzeugsteuerung kann zum Beispiel ein Fahrassistenzsystem umfassen.

Zu der Erfindung gehört auch die Steuervorrichtung für das Kraftfahrzeug. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele beschrieben. Hierzu zeigt:
- Fig. 1: eine schematische Seitenansicht eines Kraftfahrzeugs mit einem Fahrzeugscheinwerfer;
- Fig. 2: einen Ausschnitt einer schematischen Frontansicht des Kraftfahrzeugs gemäß Fig. 1;
- Fig. 3: eine vergrößerte Darstellung eines Bereichs III in Fig. 2:
- Fig. 4: eine schematische Schnittansicht im Bereich des Scheinwerfers 12 gemäß Fig. 1 in einer ersten Ausgestaltung; und
- Fig. 5: eine schematische Schnittansicht im Bereich des Scheinwerfers 12 gemäß Fig. 1 in einer zweiten Ausgestaltung.

Bei den im Folgenden erläuterten Ausführungsbeispielen handelt es sich um bevorzugte Ausführungsformen.

Bei den Ausführungsbeispielen stellen die beschriebenen Komponenten der Ausführungsformen jeweils einzelne, unabhängig voneinander zu betrachtende Merkmale dar welche die Offenbarung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale ergänzbar.

In den Figuren bezeichnen gleiche Bezugszeichen jeweils funktionsgleiche Elemente.

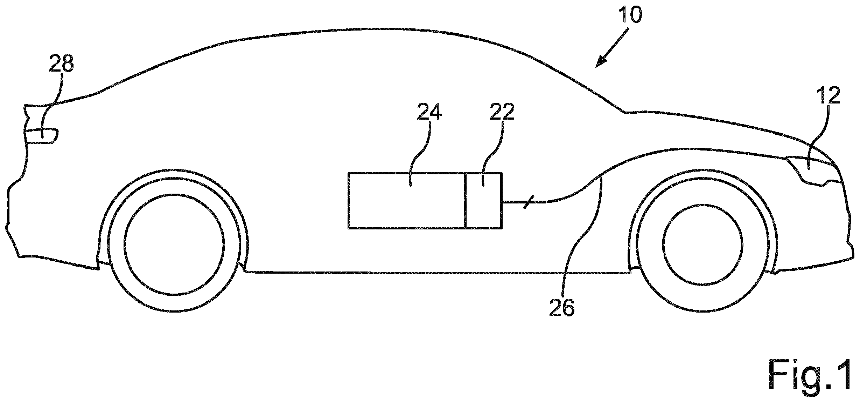

Fig. 1 zeigt in einer schematischen Seitenansicht ein Elektrofahrzeug 10 als Kraftfahrzeug, welches vorliegend als Personenkraftwagen ausgebildet ist. Das Elektrofahrzeug 10 umfasst eine Fahrzeugsteuerung 24, die eine Fahrassistenzfunktion bereitstellt. Darüber hinaus umfasst das Elektrofahrzeug 10 zwei Frontscheinwerfer als Fahrzeugscheinwerfer 12, von denen in Fig. 1 lediglich der rechte Frontscheinwerfer dargestellt ist. Der Fahrzeugscheinwerfer 12 ist über eine Kommunikationsleitung 26 an eine Steuervorrichtung 22 angeschlossen, die kommunikationstechnisch mit der übergeordneten Fahrzeugsteuerung 24 in Verbindung steht. Entsprechend weist das Elektrofahrzeug 10 zwei Heckscheinwerfer 28 auf, von denen der linke in Fig. 1 dargestellt ist. Die folgenden Ausführungen für den Frontscheinwerfer 12 sind dem Grunde nach auch auf den Heckscheinwerfer 28 entsprechend übertragbar, weshalb von einer weitergehenden detaillierten Erläuterung der Heckscheinwerfer 28 abgesehen wird. Darüber hinaus ist die Erfindung natürlich auch bei nahezu beliebigen anderen Fahrzeugscheinwerfern oder Beleuchtungseinrichtungen, insbesondere auch bei Leuchten in einem Innenbereich des Elektrofahrzeugs 10, entsprechend anwendbar.

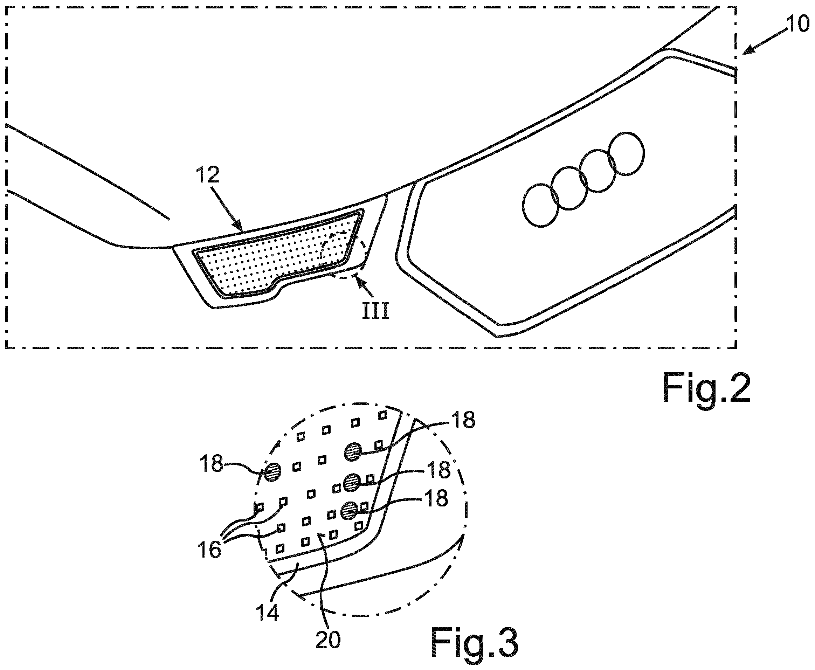

Der Fahrzeugscheinwerfer 12 ist vorliegend als Pixelscheinwerfer ausgebildet, und zwar basierend auf einer Mehrzahl von individuell steuerbaren Mikroleuchtdioden 16, wie es im Folgenden noch anhand der Fig. 2 und 3 erläutert wird. Die Mikroleuchtdioden 16 sind mittels der Steuervorrichtung 22 individuell steuerbar.

Fig. 2 zeigt in einer vergrößerten Darstellung einen Ausschnitt einer Frontansicht des Kraftfahrzeugs gemäß Fig. 1. Zu erkennen ist der rechte vordere Frontscheinwerfer 12, der neben einem frontseitigen Kühlergrill angeordnet ist. Der Fahrzeugscheinwerfer 12 dient der vorschriftsmäßigen Beleuchtung während des bestimmungsgemäßen Betriebs des Elektrofahrzeugs 10.

Fig. 3 zeigt eine vergrößerte Darstellung eines Bereichs III in Fig. 2 des Fahrzeugscheinwerfers 12. Zu erkennen ist, dass der Fahrzeugscheinwerfer 12 ein Trägerelement 14 aufweist, welches vorliegend einstückig und aus Glas gebildet ist. Auf dem Trägerelement 14 ist eine Mehrzahl der Mikroleuchtdioden 16 als Pixel angeordnet. Die Mikroleuchtdioden 16 sind mittels der Steuervorrichtung 22 individuell steuerbar, sodass während des bestimmungsgemäßen Fahrbetriebs eine vorgebbare Lichtverteilung mittels des Scheinwerfers 12 erreicht werden kann. Zu diesem Zweck umfasst das Trägerelement 14 nicht dargestellte elektrische Leiterbahnen, an denen die Mikroleuchtdioden 16 angeschlossen sind. Die Mikroleuchtdioden 16 sind vorliegend auf nicht dargestellte Lötpads des Trägerelemente 14 aufgelötet.

Aus Fig. 3 ist ferner ersichtlich, dass in einem leuchtdiodenfreien Bereich des Trägerelements 14 mehrere Kameras 18 als Sensorelemente angeordnet sind. Die Kameras 18 sind ebenso wie die Mikroleuchtdioden 16 am Trägerelement 14 befestigt und angeschlossen.

Das Trägerelement 14 braucht nicht zwingend transparent ausgebildet zu sein, sondern es kann bei alternativen Ausgestaltungen, die nicht unter vorliegende Erfindung fallen, auch aus einem intransparenten Glas gebildet sein. Sowohl die Mikroleuchtdioden 16 als auch die Kameras 18 sind auf einer von zwei gegenüberliegenden Oberflächen 20 des Trägerelements 14 gemeinsam angeordnet. In einer nicht erfindungsgemäßen Ausgestaltung kann vorgesehen sein, dass die Oberfläche 20 weiß oder silbrig ist. Dies kann zum Beispiel durch eine geeignete Beschichtung der Oberfläche 20 erreicht werden.

Das Trägerelement 14 ist in der vorliegenden Ausgestaltung plattenartig ausgebildet und weist eine Wölbung auf. Die Form der Wölbung ist an eine Form einer Karosserie des Elektrofahrzeugs 10 angepasst ausgebildet. Durch die plattenartige Ausgestaltung kann der Scheinwerfer 12 sehr flach ausgebildet werden, sodass er auf einfache Weise in die Karosserie des Elektrofahrzeugs 10 integriert werden kann. Darüber hinaus erlaubt es die Wölbung des Trägerelements 12, dass der Fahrzeugscheinwerfer 12 gut an eine äußere Kontur der Karosserie des Elektrofahrzeugs 10 angepasst werden kann, sodass eine gute konstruktive Integration erreicht werden kann. Dadurch kann Aufwand für die Konstruktion reduziert und Fugen können vermieden werden. Dadurch, dass der Fahrzeugscheinwerfer 12 nicht nur die Mikroleuchtdioden 16, sondern auch die Kameras 18 umfasst, braucht das Elektrofahrzeug 12 keine gesonderten Konstruktionsmerkmale für die Kameras 18 aufzuweisen. Darüber hinaus können neben dem Konstruktionsaufwand auch Toleranzprobleme, die hierdurch verursacht sein können, vermieden werden beziehungsweise reduziert werden.

In der vorliegenden Ausgestaltung ist vorgesehen, dass die Mikroleuchtdioden 16 für die Lichtabgabe von im Wesentlichen weißem Licht ausgebildet sind. In alternativen Ausgestaltungen kann die Farbe des Lichts natürlich auch variieren, beispielsweise wenn der Fahrzeugscheinwerfer 12 als rückwärtiger Scheinwerfer eingesetzt werden soll oder dergleichen. Darüber hinaus kann der Fahrzeugscheinwerfer 12 natürlich auch dazu dienen, Abbiegelichtsignale abzugeben, zu welchem Zweck dann vorzugsweise zumindest ein Teil der Mikroleuchtdioden 16 für die Abgabe von gelbem Licht ausgebildet sein kann.

Durch die gemäß der Erfindung mögliche verteilte Anordnung der Kameras 18 kann erreicht werden, dass auf einfache Weise ein entsprechendes Umfeld visuell erfasst werden kann. Die von den Kameras 18 bereitgestellten Sensorsignale werden ebenfalls an die Steuervorrichtung 22 übermittelt, die diesbezüglich eine erste Auswertung vornimmt und die ausgewerteten Daten der übergeordneten Fahrzeugsteuerung 24 zur Verfügung stellt.

Auch wenn im vorliegenden Ausführungsbeispiel die Steuervorrichtung 22 getrennt vom Fahrzeugscheinwerfer 12 ausgebildet ist, kann in alternativen Ausgestaltungen vorgesehen sein, dass die Steuervorrichtung 22 zumindest teilweise in den Fahrzeugscheinwerfer integriert angeordnet beziehungsweise Bestandteil von diesem ist.

Die Fahrzeugsteuerung 22 gemäß dem vorliegenden Ausführungsbeispiel dient nicht nur zum Anschließen des Fahrzeugscheinwerfers 12 gemäß Fig. 1, wie er dargestellt ist, sondern auch zum Anschließen des zweiten Fahrzeugscheinwerfers 12, der in den Fig. nicht dargestellt ist.

Dem Grunde nach kann ein jeweiliger Fahrzeugscheinwerfer 12 jedoch auch eine eigene individuelle Steuervorrichtung umfassen.

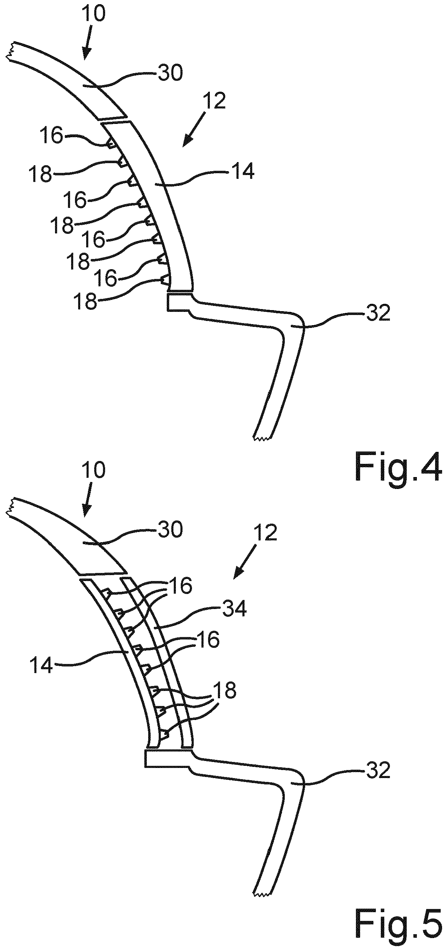

Fig. 4 zeigt eine schematische Schnittansicht im Bereich des Fahrzeugscheinwerfers 12 gemäß Fig. 1 in einer ersten Ausgestaltung, die nicht unter die vorliegende Erfindung fällt. Zu erkennen ist, dass eine Kontur des Trägerelements 14 vorliegend an eine Außenkontur einer Karosserie 30 des Elektrofahrzeugs 10 angepasst ausgebildet ist. Dazu schließt das Trägerelement 14 nach oben an die Karosserie 30 und nach unten an einen vorderen Stoßfänger 32 des Elektrofahrzeugs 10 an. Das Trägerelements 14 ist vorliegend transparent ausgebildet, vorzugsweise aus einem Glas. An einer Innenseite des Trägerelements 14 sind die Mikroleuchtdioden 16 und die Kameras 18 angeordnet. In dieser Ausgestaltung sind die Mikroleuchtdioden 16 und die Kameras 18 durch das Trägerelement 14 geschützt angeordnet.

Fig. 5 zeigt eine schematische Schnittansicht wie Fig. 4 im Bereich des Scheinwerfers 12 gemäß Fig. 1 in einer zweiten alternativen Ausgestaltung, die nicht unter die vorliegende Erfindung fällt. Das Trägerelement 14 ist hier opak ausgebildet. Die Mikroleuchtdioden 16 und die Kameras 18 sind an einer Außenseite des Trägerelements 14 angeordnet. Ferner umfasst dieser Fahrzeugscheinwerfer 12 ein Deckglas 34, welches das Trägerelement 14 mit den Mikroleuchtdioden 16 und die Kameras 18 schützt. Die weiteren Merkmale entsprechen im Wesentlichen den, wie sie bereits zur Fig. 4 erläutert wurden, weshalb diesbezüglich auf die entsprechenden vorherigen ausführen verwiesen wird.

Die Ausführungsbeispiele dienen ausschließlich der Erläuterung der Erfindung und sollen diese nicht beschränken.

## Patentansprüche

1. Scheinwerfer (12) für ein Kraftfahrzeug (10) mit einem Trägerelement (14), auf welchem eine Mehrzahl von Leuchtdioden (16) angeordnet sind, die bezüglich einer Lichtabgabe individuell steuerbar sind, um mittels des Scheinwerfers (12) Licht gemäß einer vorgebbaren Lichtverteilung abzugeben, wobei die Leuchtdioden (16) als Mikroleuchtdioden ausgebildet sind, wobei in einem leuchtdiodenfreien Bereich des Trägerelements (14) wenigstens ein Sensorelement (18) angeordnet ist, sodass die Leuchtdioden (16) und das wenigstens eine Sensorelement (18) auf dem gleichen Trägerelement (14) angeordnet sind, wobei das Trägerelement (14) transparent oder opak ausgebildet ist,
**dadurch gekennzeichnet, dass**
die Mikroleuchtdioden (16) auf einer ersten der beiden gegenüberliegenden Oberflächen des Trägerelements (14) und das wenigstens eine Sensorelement (18) auf einer der ersten Oberfläche gegenüberliegenden zweiten Oberfläche des Trägerelements (14) angeordnet sind.

2. Scheinwerfer nach Anspruch 1,
**dadurch gekennzeichnet, dass** das Trägerelement (14) plattenartig ausgebildet ist und eine Wölbung aufweist.

3. Scheinwerfer nach Anspruch 1 oder 2,
**dadurch gekennzeichnet, dass** das Trägerelement (14) opak ausgebildet ist und die Mikroleuchtdioden (16) derart angeordnet sind, dass deren Lichtabgabe in Richtung des Trägerelements (14) erfolgt.

4. Scheinwerfer nach einem Anspruch 1 oder 2,
**dadurch gekennzeichnet, dass** das Trägerelement (14) transparent ausgebildet ist und das wenigstens eine Sensorelement (18) einen zu erfassenden Bereich durch das Trägerelement (14) hindurch erfasst.

5. Scheinwerfer nach einem der vorhergehenden Ansprüche,
**dadurch gekennzeichnet, dass** mehrere Sensorelemente (18) vorgesehen sind, wobei die Sensorelemente (18) in einem ersten Bereich des Trägerelements (14) gemeinsam angeordnet sind, der von einem zweiten Bereich getrennt ausgebildet ist, in dem die Mikroleuchtdioden (16) angeordnet sind.

6. Scheinwerfer nach einem der vorhergehenden Ansprüche 1 bis 4,
**dadurch gekennzeichnet, dass** mehrere Sensorelemente (18) vorgesehen sind, wobei die Sensorelemente (18) jeweils zumindest durch eine der Mikroleuchtdioden (16) voneinander beabstandet angeordnet sind.

7. Kraftfahrzeug (10) mit wenigstens einem Fahrzeugscheinwerfer (12) und einer den Fahrzeugscheinwerfer (12) steuernden Steuervorrichtung (22), **dadurch gekennzeichnet, dass**
der Fahrzeugscheinwerfer (12) gemäß einem der vorhergehenden Ansprüche ausgebildet ist, wobei der Fahrzeugscheinwerfer (12) bündig mit einer Außenkontur des Kraftfahrzeugs (10) ausgebildet ist und/oder ein Trägerelement (14) des Fahrzeugscheinwerfers (12) transparent ausgebildet ist.

## Claims

1. A headlight (12) for a motor vehicle (10) comprising a carrier element (14), on which a plurality of light-emitting diodes (16) is arranged, which are individually controllable with respect to a light output, to output light according to a presettable light distribution by the headlight (12), wherein the light-emitting diodes (16) are designed as micro light-emitting diodes, wherein at least one sensor element (18) is arranged in a region of the carrier element (14) free from light-emitting diodes, such that the light-emitting diodes (16) and the at least one sensor element (18) are arranged on the same carrier element (14), wherein the carrier element (14) is designed to be transparent or opaque, **characterized in that**
the micro light-emitting diodes (16) are arranged on a first one of the two opposing surfaces of the carrier element (14) and the at least one sensor element (18) is arranged on a second surface of the carrier element (14) opposing the first surface.

2. The headlight according to claim 1,
**characterized in that** the carrier element (14) is designed to be plate-like and comprises a curvature.

3. The headlight according to claim 1 or 2,
**characterized in that** the carrier element (14) is designed to be opaque and the micro light-emitting diodes (16) are arranged in such a way that their light output is effected towards the carrier element (14).

4. The headlight according to claim 1 or 2,
**characterized in that** the carrier element (14) is designed to be transparent and the at least one sensor element (18) captures a region to be captured through the carrier element (14).

5. The headlight according to any one of the preceding claims,
**characterized in that** multiple sensor elements (18) are provided, wherein the sensor elements (18) are commonly arranged in a first region of the carrier element (14), which is designed to be separate from a second region, in which the micro light-emitting diodes (16) are arranged.

6. The headlight according to any one of the preceding claims 1 to 4,
**characterized in that** multiple sensor elements (18) are provided, wherein the sensor elements (18) are each arranged spaced from each other at least by one of the micro light-emitting diodes (16).

7. A motor vehicle (10) comprising at least one vehicle headlight (12) and a control device (22) controlling the vehicle headlight (12),
**characterized in that**
the vehicle headlight (12) is designed according to any one of the preceding claims, wherein the vehicle headlight (12) is designed to be flush with an outer contour of the motor vehicle (10) and/or a carrier element (14) of the vehicle headlight (12) is designed to be transparent.

## Revendications

1. Phare (12) pour un véhicule à moteur (10) comportant un élément de support (14) sur lequel est agencée une pluralité de diodes électroluminescentes (16) qui peuvent être commandées individuellement en termes d'émission de lumière, afin d'émettre de la lumière au moyen du phare (12) en fonction d'une distribution de lumière pouvant être prédéfinie, les diodes électroluminescentes (16) étant réalisées sous forme de micro-diodes électroluminescentes, au moins un élément de détection (18) étant agencé dans une zone de l'élément de support (14) exempte de diodes électroluminescentes, de telle sorte que les diodes électroluminescentes (16) et le au moins un élément de détection (18) sont agencés sur le même élément de support (14), l'élément de support (14) étant réalisé de manière transparente ou opaque,
**caractérisé en ce que**
les micro-diodes électroluminescentes (16) sont agencées sur une première des deux surfaces opposées de l'élément de support (14) et le au moins un élément de détection (18) est agencé sur une seconde surface de l'élément de support (14) opposée à la première surface.

2. Phase selon la revendication 1,
**caractérisé en ce que** l'élément de support (14) est réalisé de manière analogue à une plaque et présente une courbure.

3. Phare selon la revendication 1 ou 2,
**caractérisé en ce que** l'élément de support (14) est réalisé de manière opaque et les micro-diodes électroluminescentes (16) sont agencées de telle sorte que leur lumière est émise en direction de l'élément de support (14).

4. Phare selon la revendication 1 ou 2,
**caractérisé en ce que** l'élément de support (14) est réalisé de manière transparente et le au moins un élément de détection (18) détecte une zone à détecter à travers l'élément de support (14).

5. Phare selon l'une des revendications précédentes,
**caractérisé en ce que** plusieurs éléments de détection (18) sont prévus, les éléments de détection (18) étant agencés ensemble dans une première zone de l'élément de support (14) qui est formée séparément d'une seconde zone dans laquelle les micro-diodes électroluminescentes (16) sont agencées.

6. Phare selon l'une des revendications 1 à 4 précédentes, **caractérisé en ce que** plusieurs éléments de détection (18) sont prévus, les éléments de détection (18) étant respectivement agencés de manière espacée les uns des autres par au moins une des micro-diodes électroluminescentes (16).

7. Véhicule à moteur (10) comportant au moins un phare de véhicule (12) et un dispositif de commande (22) qui commande le phare de véhicule (12),
**caractérisé en ce que**
le phare de véhicule (12) est réalisé selon l'une des revendications précédentes, le phare de véhicule (12) étant réalisé de manière affleurante à un contour extérieur du véhicule à moteur (10) et/ou un élément de support (14) du phare de véhicule (12) étant réalisé de manière transparente.
